Europäisches Patentamt

European Patent Office

Office européen des brevets

(11) Veröffentlichungsnummer: **0 445 638 A2**

(12) **EUROPÄISCHE PATENTANMELDUNG**

(21) Anmeldenummer: **91102894.2**

(22) Anmeldetag: **28.02.91**

(51) Int. Cl.[5]: **B32B 27/08**

(30) Priorität: **09.03.90 DE 4007429**

(43) Veröffentlichungstag der Anmeldung:
**11.09.91 Patentblatt 91/37**

(84) Benannte Vertragsstaaten:
**AT BE CH DE FR GB IT LI LU NL SE**

(71) Anmelder: **HOECHST AKTIENGESELLSCHAFT**
**Postfach 80 03 20**
**W-6230 Frankfurt am Main 80(DE)**

(72) Erfinder: **Dinter, Peter**
**Am Wiesenberg 4**
**W-6227 Oestrich-Winkel 3(DE)**
Erfinder: **Spross, Bernd**
**Drosselweg 2a**
**W-6204 Taunusstein(DE)**
Erfinder: **Roth, Werner, Dr.**
**Kreuzheck 2**
**W-6239 Eppstein-Niederjosbach(DE)**

(54) **Hochfester Verbundkörper auf Basis von miteinander verpressten orientierten Folien aus thermoplastischem Kunststoff und Verfahren zu seiner Herstellung.**

(57) Es wird ein hochfester dimensionsstabiler Verbundkörper in Gestalt einer ebenen Platte oder einer nicht ebenen Raumform aus einer Anzahl übereinander geschichteter, miteinander verpreßter, thermoplastischer Kunststoffolien beschrieben. Die Kunststoffolien sind jeweils zumindest einseitig mit einer Siegelschicht überzogen, deren Schmelzpunkt niedriger als der Schmelzpunkt jeder der Kunststoffolien ist, und mono- und/oder biaxial streckorientiert. Zwischen den orientierten Folien aus thermoplastischem Kunststoff ist wenigstens eine metallische Verstärkungsschicht als integraler Bestandteil des Verbundkörpers eingebettet. Die metallische Verstärkungsschicht weist eine Vielzahl von über die Fläche verteilter Ausnehmungen auf.
Es wird auch ein Verfahren zur Herstellung eines Verbundkörpers beschrieben.

EP 0 445 638 A2

Die Erfindung betrifft einen dimensionsstabilen Verbundkörper in Gestalt einer ebenen Platte oder einer nicht ebenen Raumform aus einer Anzahl übereinander geschichteter, miteinander verpreßter, thermoplastischer Kunststoffolien, die jeweils zumindest einseitig mit einer Siegelschicht überzogen sind, deren Schmelzpunkt niedriger als der Schmelzpunkt jeder der Kunststoffolien ist, und die mono- und/oder biaxial streckorientiert sind, und ein Verfahren zu seiner Herstellung.

Seitens verschiedener Branchen wie z. B. dem Fahrzeugbau, Flugzeugbau, Apparatebau ist neuerdings ein verstärkter Trend zum Einsatz von Hochleistungsverbundwerkstoffen zu beobachten. Hierunter einzuordnen sind u. a. duroplastische und thermoplastische Polymerwerkstoffe, deren mechanische Eigenschaften durch Einarbeitung von Verstärkungsmaterialien in Form von Textil-, Glas-, Kohlenstoff- oder Aramidfasern um ein Vielfaches gegenüber dem unverstärkten Polymeren verbessert werden.

Alternativ zu dem Einarbeiten von Verstärkungsmaterialien wurden Techniken entwickelt, hochfeste Kunststoffplatten durch Orientierungsprozesse herzustellen. Als eine Technik im Rahmen der Orientierungsprozesse kann das in der EP-A-0 207 047 beschriebene Verfahren gelten, bei dem eine Vielzahl biaxial orientierter, mit dünnen coextrudierten Siegelschichten ausgerüsteter Folien zu einer dicken, homogenen Platte unter Druck und Temperatur verpreßt werden.

Eine verfahrensspezifische Maßnahme dieser Technik, nämlich die Verwendung einzelner Folienlagen, ermöglicht den gezielten Einbau von Funktionsschichten an beliebiger Stelle in den Formkörper und damit die maßgeschneiderte Vorbestimmung von Eigenschaften des fertigen Formkörpers. So können beispielsweise biaxial orientierte Folien mit monoaxial oder nicht orientierten artgleichen oder artfremden Folien kombiniert werden, um das bruchmechanische Verhalten des Formkörpers in gewünschter Weise zu beeinflussen. Die auf diese Weise erzielten Produkteigenschaften reichen vielfach aber nicht aus, um den extremen mechanischen Anforderungen hochbeanspruchter Materialien in der Praxis gerecht zu werden, wie sie z. B. im öffentlichen, industriellen oder militärischen Bereich eingesetzte durchbruch-, insbesondere durchschußsichere Abschirmmaterialien erfüllen müssen.

Einen praktikablen Weg zur Verbesserung der Festigkeitseigenschaften stellt in anderen Bereichen wie z. B. in der Glasfertigung die Methode dar, Metallarmierungen in den Basiswerkstoff einzubringen. Diese Kombinationen aus Glas und Metall sind jedoch für manche Anwendungen ungeeignet, weil sie ein zu großes Gewicht besitzen.

Aufgabe der vorliegenden Erfindung ist es, einen hochfesten dimensionsstabilen Verbundkörper der eingangs beschriebenen Art als ebenen oder sphärisch geformten Formkörper weiterzuentwickeln und dessen mechanische Festigkeit so zu erhöhen, daß der Formkörper als Abschirmmaterial, insbesondere gegen den Durchschlag von Projektilen, eingesetzt werden kann und sich dabei durch ein besonders niedriges Gewicht auszeichnet.

Diese Aufgabe wird erfindungsgemäß durch einen Verbundkörper der eingangs genannten Gattung gelöst, dessen Kennzeichenmerkmale darin zu sehen sind, daß zwischen den orientierten Folien aus thermoplastischem Kunststoff wenigstens eine metallische Verstärkungsschicht als integraler Bestandteil des Verbundkörpers eingebettet ist und daß die metallische Verstärkungsschicht eine Vielzahl von über die Fläche verteilter Ausnehmungen aufweist.

In bevorzugter Ausgestaltung der Erfindung ist die metallische Verstärkungsschicht mittig in dem Verbundkörper eingebettet, wobei jede der beiden sich durch die Ausnehmungen hindurch teilweise berührenden Siegelschichten, die auf zueinander benachbarten Kunststoffolien aufgebracht sind, die Verstärkungsschicht entlang ihrer Oberflächenstruktur umschließt.

Die metallische Verstärkungsschicht kann z. B. in Form eines Lochbleches, eines Drahtgewebes oder eines Drahtgitters (Maschendraht) vorliegen. Wenn ganz besondere Festigkeit erwünscht ist, können gegebenenfalls auch mehr als eine metallische Verstärkungsschicht in den Verbundkörper eingebettet sein. Insbesondere handelt es sich hierbei bevorzugterweise um Metallgewebe oder Lochbleche in einer Dicke bis maximal 1 mm und Maschenweiten von minimal 1 mm. Werkstoffseitig können prinzipiell alle auf dem Markt erhältlichen Materialien wie z. B. Stahl, Edelstahl, Messing, Kupfer, Aluminium etc. eingesetzt werden.

Geeignet zur Herstellung des erfindungsgemäßen vielschichtigen Verbundkörpers sind thermoplastische Kunststoffolien mit mindestens einer Heißsiegelschicht. Besonders geeignet sind Folien aus thermoplastischen Kunststoffen aus der Gruppe der Polyester und der Polyolefine, die beidseitig Heißsiegelschichten tragen.

Unter Polyester sind polyethylenterephthalathomo- und -copolymere, Gemische verschiedener Polyester sowie Abmischungen von Polyestern mit anderen Polymeren zu verstehen.

Als Polyolefine sollen insbesondere Propylenhomopolymere oder -copolymere eingesetzt werden, wobei letztere zum überwiegenden Teil aus Propyleneinheiten zusammengesetzt sind.

Als Heißsiegelschichten können die üblicherweise zu diesem Zweck bei der Folienherstellung eingesetzten Beschichtungen verwendet werden.

Dies sind bevorzugt statistische Copolymere aus Ethylen-Propylenbausteinen sowie Copolyester enthaltend Ethylenterephthalat- und -isophthalateinheiten. Ferner kommen als Siegel- oder Haftvermittlerschichten Ethylenvinylacetatcopolymere, Polyurethane, polyvinylbutyral, Acrylat-Copolymere und Copolyamide in Betracht.

Was die einzelnen Folienlagen des den erfindungsgemäßen Formkörper bildenden Preßlaminates betrifft, handelt es sich um Folien der vorbeschriebenen Art, die eine Dicke im Bereich von 10 bis 300 $\mu$m, bevorzugterweise jedoch 40 bis 200 $\mu$m, aufweisen. Die Dicke der Heißsiegelschicht, die ein- oder beidseitig auf der Basisschicht aufgebracht ist, soll üblicherweise 10 % der Dicke der Grundfolie nicht überschreiten und sich bevorzugt im Bereich von 0,5 bis 5 $\mu$m bewegen.

Folien der vorbeschriebenen Art zeichnen sich nicht nur durch einen günstigen Marktpreis aus, sondern weisen neben hoher mechanischer Festigkeit als Folge der biaxialen Orientierung auch eine ausreichende Transparenz auf, so daß ein daraus hergestellter Verbundkörper durchaus als ein preiswerter Ersatz für Sicherheitsglas in Betracht kommt. Die besondere Hervorhebung von Polypropylen- und Polyesterfolien als Basiswerkstoff des beanspruchten erfindungsgemäßen Verbundkörpers schließt aber in keiner Weise andere polymerwerkstoffe bzw. Polymerkombinationen von der erfindungsgemäßen Verwendung aus.

Gegenüber der in der EP-A-0 207 047 beschriebenen Einarbeitung einer vollflächig geschlossenen Metallfolie in den Plattenverbund, für die insbesondere geeignete Haftvermittlerzwischenschichten erforderlich sind, um jederzeit eine ausreichende Haftung zwischen metallischem Verstärkungsmaterial und Kunststoffträger sicherzustellen, zeichnet sich die erfindungsgemäße Lösung dadurch aus, daß Haftvermittlerzwischenschichten nicht benötigt werden. Die auf den einzelnen Trägerfolien befindlichen äußeren Siegelschichten mit Dicken im Bereich von etwa 1 $\mu$m reichen in Verbindung mit der beim Preßvorgang zwangsläufig einhergehenden Verformung der die Metallverstärkung kontaktierenden Foliengrenzflächen normalerweise aus, um die Öffnungen des Metallgewebes zu füllen und eine festhaftende Verbindung miteinander einzugehen.

Das Verfahren zur Herstellung eines Verbundkörpers durch Verpressen eines Folienstapels aus übereinander geschichteten, biaxial und/oder monoaxial streckorientierten, thermoplastischen, coextrudierten Kunststoffolien zeichnet sich dadurch aus, daß vor dem Verpressen in den Folienstapel an beliebiger Stelle, vorzugsweise mittig, zumindest eine, gegebenenfalls auch mehr als eine metallische Verstärkungsschicht in Form eines Lochbleches, eines Drahtgewebes oder eines Drahtgitters so eingelegt wird, daß sie innerhalb der Begrenzungskanten der Zuschnitte der Kunststoffolien liegt, daß anschließend eine thermische Verpressung zwischen zwei Preßmatrizen, die wahlweise glatte und/oder strukturierte Oberflächen aufweisen, vorgenommen wird, und daß die in den Schmelzzustand überführten Siegelschichten auf den Kunststoffolien sowohl die Verstärkungsschicht allseitig einhüllen als auch deren Ausnehmungen bzw. Gitterlücken ausfüllen, so daß nach dem Abkühlen des Folienstapel ein untrennbarer Verbundkörper aus Kunststoffolien, Siegelschichten und Verstärkerschicht vorliegt.

Die Erfindung wird im folgenden anhand von zeichnerisch dargestellten Ausführungsbeispielen näher erläutert. Es zeigen:

Fig. 1     einen vergrößerten Querschnitt durch einen erfindungsgemäßen Verbundkörper,

Fig. 2     einen vergrößerten Querschnitt durch einen erfindungsgemäßen Verbundkörper mit einer dickeren Verstärkungsschicht,

Fig. 3     einen vergrößerten Querschnitt durch einen erfindungsgemäßen Verbundkörper mit einer Verstärkungsschicht, die in einer Siegelschichtfolie vollständig eingelagert ist.

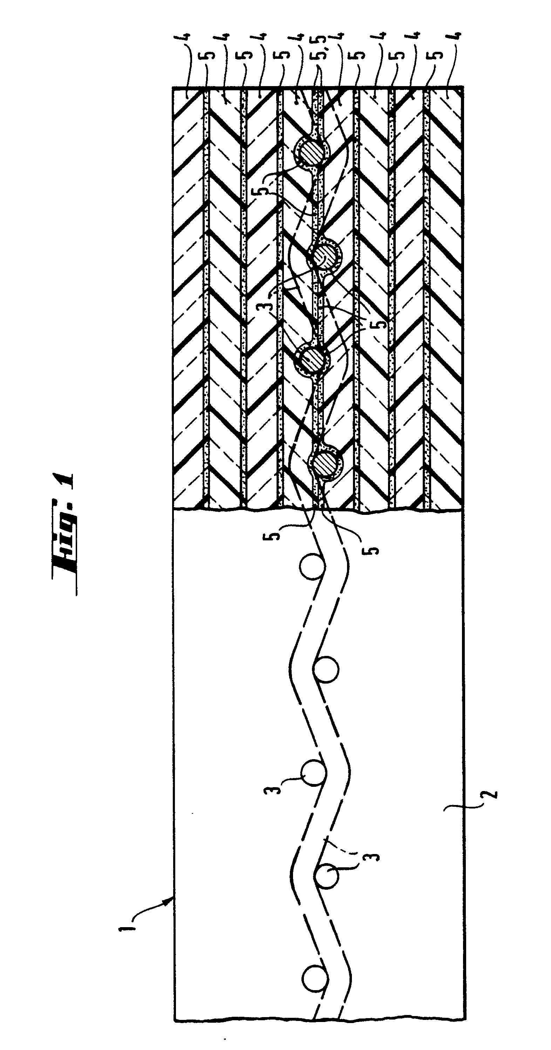

Eine erste Ausführungsform eines ebenen, plattenförmigen Verbundkörpers 1 ist in Figur 1 dargestellt und besteht aus einer Polymermatrix 2, in der mittig eine metallische Verstärkungsschicht 3 eingelagert ist, z. B. ein Drahtgitter. Die Polymermatrix 2 besteht aus einem siegelfähigen Polymer, das allseitig die Verstärkungsschicht 3 einschließt. Die Polymermatrix 2 wird durch einen Stapel von Kunststoffolien 4 durch Verpressen bei einer vorgegebenen Temperatur hergestellt. Wie ferner in Figur 1 ersichtlich ist, ist die Dicke der metallischen Verstärkungsschicht 3 und der einhüllenden Siegelschichten 5 etwa in der Größenordnung der Dicke einer einzelnen Kunststoffolie 4 ausgeführt. Auf jeder Kunststoffolie 4 befindet sich zumindest auf einer Seite eine Siegelschicht 5 aus einem siegelfähigen Polymer. Die Dicke der auf den Kunststoffolien bzw. Trägerfolien 4 aufgebrachten Siegelschichten 5, bei denen es sich im allgemeinen um Heißsiegelschichten handelt, reicht aus, um die Verstärkungsschicht 3 allseitig einzubetten und einen guten Verbund in den Grenzschichten zwischen den Siegelschichten und dem Metallgewebe der Verstärkungsschicht herbeizuführen. Während des Preßvorganges unter Wärmeanwendung auf den Kunststoffolienstapel, in welchen die Verstärkungsschicht 3 aus Metall eingelegt ist, geht das Polymer der Siegelschichten 5 in einen schmelzflüssigen Zustand über, wobei es von beiden Seiten her die Ausnehmungen bzw. Gitteroberflächen der Verstärkungsschicht 3 benetzt, um so eine nicht mehr auftrennbare Verbundhaftung zwischen der Verstärkungsschicht 3 und der Polymermatrix 2 herzustellen. Die Siegelschichten 5 haben im allgemeinen Dicken im Bereich von 1 µm.

Jede der beiden sich teilweise berührenden Siegelschichten 5, die unmittelbar an die Verstärkungsschicht 3 in Figur 1 angrenzen und die auf zueinander benachbarten Kunststoffolien aufgebracht sind, schließen die Verstärkungsschicht 3 entlang ihrer Oberflächenstruktur ein.

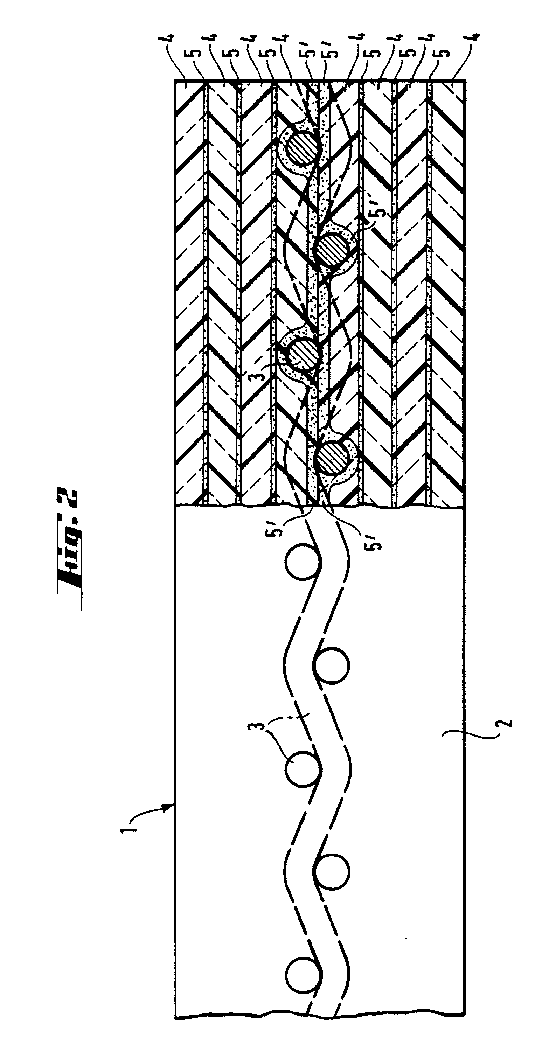

Figur 2 zeigt eine zweite Ausführungsform eines Verbundkörpers 1, der ähnlich dem Verbundkörper nach Figur 1 aufgebaut ist. Die Verstärkungsschicht 3 bzw. das hierfür verwendete Drahtgewebe besitzt eine größere Dicke als die Verstärkungsschicht nach Figur 1. Ferner sind wesentlich dickere Heißsiegelschichten 5' auf den beiden die jeweiligen Grenzschichten zu der Verstärkungsschicht 3 bildenden Kunststoffolien bzw. Trägerfolien 4 vorgesehen. Die beiden Kunststoffolien 4, die jeweils die Grenzschichten zu der Verstärkungsschicht 3 bilden, unterscheiden sich gegenüber den sonstigen Kunststoffolien 4 des Verbundkörpers 1 bzw. des Stapels aus Kunststoffolien nur dadurch, daß ihre mit dem Drahtgewebe der Verstärkungsschicht 3 in direktem Kontakt stehenden Siegelschichten 5' eine wesentlich größere Schichtdicke als jene ihrer Siegelschichten 5 aufweisen, welche von der Verstärkungsschicht 3 abgewandt sind.

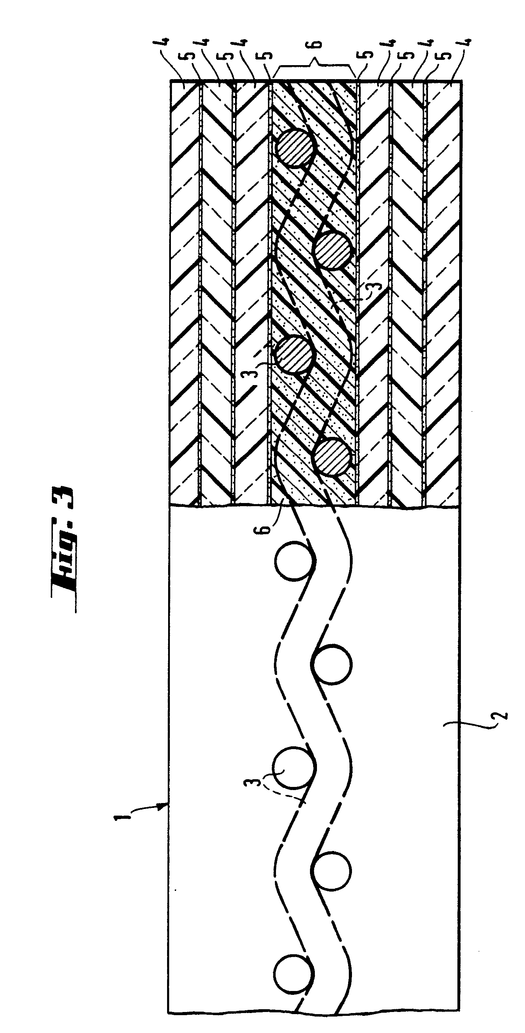

Bei einer dritten Ausführungsform des Verbundkörpers 1, wie er in Figur 3 gezeigt ist, ist eine sehr dicke, sich im mm-Bereich bewegende Verstärkungsschicht 3 eingebaut. Hierzu ist in die durch das Drahtgewebe der Verstärkungsschicht 3 des Verbundkörpers 1 definierte Stärke eine entsprechend dicke Heißsiegelschicht in Form einer selbsttragenden Siegelschichtfolie 6 eingebracht, die aus demselben Polymerwerkstoff wie die Siegelschichten 5 der Kunststoffolien 4 des Verbundkörpers 1 besteht. Die Dicke der Siegelschichtfolie 6 ist größer als die Dicke der Verstärkungsschicht 3. Die Masse der Siegelschichtfolie 6 muß ausreichen, um beim Preßvorgang die offenen Querschnitte bzw. Poren des Drahtgewebes der Verstärkungsschicht 3 auszufüllen und die Verbundhaftung mit den angrenzenden Siegelschichten 5 herzustellen.

Die Verstärkungsschicht 3 kann bei Bedarf auch zwischen mehreren beidseitig beschichteten Siegelschichtfolien 6 eingebettet sein, falls es die Dicke der Verstärkungsschicht 3 erfordert. Bei den Siegelschichtfolien 6 handelt es sich im allgemeinen um nicht verstreckte, amorphe, zäh-elastische Polymerschichten, die infolge ihrer zäh-elastischen Eigenschaften durch ihre Einlagerung in den Verbundkörper 1 zu einer erheblichen Erhöhung seiner Bruchfestigkeit beitragen.

Die selbsttragende Siegelschichtfolie 6 besteht aus dem gleichen Polymerwerkstoff wie die Siegelschichten 5 der Kunststoff- bzw. Trägerfolien 4, jedoch ist es genauso möglich, daß die Siegelschichtfolie 6 aus einem anderen Polymerwerkstoff als die Siegelschichten 5 geformt ist.

Die Siegelschichtfolie 6 wird entweder als Einzelfolie beim Aufeinanderschichten des Folienstapels eingelegt oder als Heißsiegelschichtfolie 6, die bereits von Draht verstärkt ist, in den Stapel eingebracht. Es bildet dann die Verstärkungsschicht 3 eine Drahtgitterschicht, die in der selbsttragenden Siegel- oder Haftvermittlungsschichtfolie 6 eingelagert ist. Der Verbund aus Drahtschicht/Siegel- oder Haftvermittlungsschicht formt dann eine separate Schichtkomponente, die in den Folienstapel des Verbundkörpers 1 eingelegt wird. Die drahtverstärkte Siegelschichtfolie 6 wird beispielsweise in der Weise erhalten, daß das Drahtverstärkungsmaterial zwischen zwei Heißsiegelschichtbahnen eingeschossen wird und dieser dreilagige Verbund durch eine Doppelbandpresse bewegt wird, in der unter Druck und Temperatur die aufschmelzenden Siegelschichten das Drahtgewebe durchtränken und einen Verbund aus vorimprägniertem Material bilden.

## Patentansprüche

1. Hochfester, dimensionsstabiler Verbundkörper in Gestalt einer ebenen Platte oder einer nicht ebenen Raumform aus einer Anzahl übereinander geschichteter, miteinander verpreßter, thermoplastischer Kunststoffolien, die jeweils zumindest einseitig mit einer Siegelschicht überzogen sind, deren Schmelzpunkt niedriger als der Schmelzpunkt jeder der Kunststoffolien ist, und die mono- und/ oder biaxial streckorientiert sind, dadurch gekennzeichnet, daß zwischen den orientierten Folien aus thermoplastischem Kunststoff wenigstens eine metallische Verstärkungsschicht als integraler Bestandteil des Verbundkörpers eingebettet ist und daß die metallische Verstärkungsschicht eine Vielzahl von über die Fläche verteilter Ausnehmungen aufweist.

2. Verbundkörper nach Anspruch 1, dadurch gekennzeichnet, daß die metallische Verstärkungsschicht mittig in dem Verbundkörper eingebettet ist, wobei jede der beiden sich durch die Ausnehmungen hindurch teilweise berührenden Siegelschichten, die auf zueinander benachbarten Kunststoffolien aufgebracht sind, die Verstärkungsschicht entlang ihrer Oberflächenstruktur umschließt.

3. Verbundkörper nach Anspruch 1 oder 2, dadurch gekennzeichnet, daß die metallische Verstärkungsschicht in Form eines Lochbleches, eines Drahtgewebes oder eines Drahtgitters vorliegt.

4. Verbundkörper nach einem der Ansprüche 1 bis 3, dadurch gekennzeichnet, daß mehr als eine metallische Verstärkungsschicht in den Verbundkörper eingebettet ist.

5. Verbundkörper nach einem der Ansprüche 1 bis 4, dadurch gekennzeichnet, daß als metallische Verstärkungsschicht Metallgewebe oder Lochbleche in einer Dicke bis maximal 1 mm und Maschenweiten von minimal 1 mm aus Stahl, Edelstahl, Messing, Kupfer, Aluminium etc. eingesetzt werden.

6. Verfahren zur Herstellung eines Verbundkörpers gemäß einem der Ansprüche 1 bis 5, durch Verpressen eines Folienstapels aus übereinander geschichteten, biaxial und/oder monoaxial streckorientierten, thermoplastischen, coextrudierten Kunststofffolien, dadurch gekennzeichnet, daß vor dem Verpressen in den Folienstapel an beliebiger Stelle, vorzugsweise mittig, zumindest eine, gegebenenfalls auch mehr als eine metallische Verstärkungsschicht in Form eines Lochbleches, eines Drahtgewebes oder eines Drahtgitters so eingelegt wird, daß sie innerhalb der Begrenzungskanten der Zuschnitte der Kunststofffolien liegt, daß anschließend eine thermische Verpressung zwischen zwei Preßmatrizen, die wahlweise glatte und/oder strukturierte Oberflächen aufweisen, vorgenommen wird, und daß die in den Schmelzzustand überführten Siegelschichten auf den Kunststofffolien sowohl die Verstärkungsschicht allseitig einhüllen als auch deren Ausnehmungen bzw. Gitterlücken ausfüllen, so daß nach dem Abkühlen des Folienstapels ein untrennbarer Verbundkörper aus Kunststofffolien, Siegelschichten und Verstärkungsschicht vorliegt.

**Fig. 1**

EP 0 445 638 A2

Fig: 2

EP 0 445 638 A2

Fig. 3